(19) **Europäisches Patentamt / European Patent Office / Office européen des brevets**

(11) **EP 4 198 686 B1**

(12) **FASCICULE DE BREVET EUROPEEN**

(45) Date de publication et mention de la délivrance du brevet:
**19.11.2025 Bulletin 2025/47**

(21) Numéro de dépôt: **21214743.3**

(22) Date de dépôt: **15.12.2021**

(51) Classification Internationale des Brevets (IPC):
**G06F 1/26** (2006.01) **G06F 1/3203** (2019.01)

(52) Classification Coopérative des Brevets (CPC):
**G06F 1/26; G06F 1/263; G06F 1/3203**

(54) **PROCÉDÉ D'OPTIMISATION DE LA CONSOMMATION ÉLECTRIQUE D'UNE INFRASTRUCTURE INFORMATIQUE ET SYSTÈME ASSOCIÉ**

VERFAHREN ZUR OPTIMIERUNG DES STROMVERBRAUCHS EINER IT-INFRASTRUKTUR UND ENTSPRECHENDES SYSTEM

METHOD FOR OPTIMISING THE POWER CONSUMPTION OF A COMPUTER INFRASTRUCTURE AND ASSOCIATED SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**21.06.2023 Bulletin 2023/25**

(73) Titulaire: **Bull SAS**
**78340 Les Clayes-sous-Bois (FR)**

(72) Inventeurs:
- **PRALET, STÉPHANE**
  **38880 Autrans (FR)**
- **SEROUL, PIERRE**
  **38650 Sinard (FR)**
- **BERRÉ, JEAN-FRANCOIS**
  **38610 GIERES (FR)**
- **MARTIN, JACQUES**
  **38410 St Martin d'Uriage (FR)**
- **SCHRICKE, HÉLÈNE**
  **38000 Grenoble (FR)**
- **BARANCOURT, HERVÉ**
  **38320 Brié et Angonnes (FR)**
- **PIN, LIONEL**
  **38220 VIZILLE (FR)**

(74) Mandataire: **Cabinet Camus Lebkiri**
**25 rue de Maubeuge**
**75009 Paris (FR)**

(56) Documents cités:
**WO-A1-2011/019439 WO-A1-2016/105625 US-A1- 2019 081 479**

**Description**

## DOMAINE TECHNIQUE DE L'INVENTION

Le domaine technique de l'invention est celui de l'optimisation de la consommation électrique d'une infrastructure informatique.

## ARRIÈRE-PLAN TECHNOLOGIQUE DE L'INVENTION

Pour pouvoir effectuer des tâches pour lesquelles une infrastructure informatique est utilisée, par exemple un supercalculateur réalisant des calculs de simulation numérique, celle-ci doit être alimentée en énergie électrique. Plus l'infrastructure informatique effectue de tâches à un instant donné, plus la mobilisation de ressources informatiques nécessaires pour la réalisation de ces tâches est importante. Il en découle une plus grande quantité d'énergie électrique consommée. L'énergie électrique est fournie par un réseau électrique, ce qui augmente considérablement la demande en énergie électrique à partir dudit réseau de distribution.

De plus, lors de la réalisation des tâches, la mobilisation des ressources informatiques augmente également la chaleur dissipée par l'infrastructure informatique. Afin d'assurer un fonctionnement optimal de cette infrastructure, elle est couplée à un système de régulation thermique. La régulation thermique peut également augmenter la demande en énergie électrique à partir dudit réseau électrique lorsque la température de l'infrastructure augmente.

Dans un contexte de multiplication du nombre d'infrastructures informatiques, il existe donc un besoin de limiter le recours à l'énergie électrique à partir du réseau de distribution électrique en limitant l'impact sur leurs performances.

Le document WO 2016/105625 A1 décrit un système et une méthode pour l'optimisation de la consommation électrique d'une infrastructure informatique.

## RÉSUMÉ DE L'INVENTION

L'invention offre une solution aux problèmes évoqués précédemment, en optimisant la consommation électrique d'une infrastructure à partir d'un réseau électrique.

L'invention concerne un procédé d'optimisation de la consommation d'énergie électrique d'une infrastructure informatique comprenant une pluralité de ressources de calcul et un premier système de régulation thermique, l'infrastructure informatique étant alimentée par un réseau électrique et au moins une source d'énergie électrique locale, l'infrastructure informatique devant exécuter un ensemble de tâches de calcul au moyen de la pluralité de ressources de calcul, le procédé comprenant les étapes suivantes :

- calcul d'une estimation de puissance électrique délivrable par le réseau électrique et d'une estimation de puissance électrique délivrable par la source d'énergie électrique locale sur un intervalle de temps ;
- estimation d'une puissance électrique consommable par l'infrastructure informatique sur l'intervalle de temps, en fonction de l'estimation de puissance électrique délivrable par le réseau électrique sur l'intervalle de temps et de l'estimation de la puissance électrique délivrable par la source d'énergie électrique locale sur l'intervalle de temps ;
- en fonction de la puissance électrique consommable estimée, détermination d'un sous-ensemble de tâches de calcul de l'ensemble de tâches de calcul à exécuter sur l'intervalle de temps ; et estimation d'un ordonnancement du sous-ensemble de tâches de calcul sur la pluralité de ressources de calcul et d'un pilotage de la pluralité de ressources de calcul et du premier système de régulation thermique sur l'intervalle de temps ;
- en fonction de l'ordonnancement et du pilotage estimés, estimation d'une puissance électrique nécessaire à l'infrastructure informatique sur l'intervalle de temps ;
- en fonction de la puissance électrique nécessaire estimée, détermination d'un paramétrage du réseau électrique et de la source d'énergie électrique locale pour l'intervalle de temps,

caracterisé en ce que le calcul de l'estimation de puissance électrique délivrable par le réseau électrique est fonction d'un indice K proportionnel à une quantité de $CO_2$ émise par le réseau électrique pour délivrer une énergie électrique sur l'intervalle de temps.

Grâce à l'invention, l'infrastructure informatique est en partie alimentée par au moins une source d'énergie électrique locale, propre à l'infrastructure informatique. L'utilisation de l'énergie électrique issue du réseau électrique est donc minimisée.

Le paramétrage du réseau électrique, de la source d'énergie électrique locale et du premier système de régulation thermique permet d'ajuster l'énergie électrique consommée pour couvrir au moins la puissance électrique nécessaire au fonctionnement de l'infrastructure informatique, c'est-à-dire l'énergie nécessaire pour réaliser certaines tâches de calcul et pour réguler la température, tout en minimisant la part de l'énergie électrique utilisée issue du réseau électrique.

Le calcul de la puissance électrique nécessaire permet de maintenir l'infrastructure informatique dans des conditions optimales de fonctionnement, c'est-à-dire avec des performances de calcul et une température optimales.

La puissance électrique consommée par le premier système de régulation est fonction de la chaleur dissipée par l'infrastructure informatique réalisant les tâches de calcul. Le premier système de régulation thermique permet de dissiper cette chaleur afin de maintenir la température de l'infrastructure informatique dans la gamme de températures permettant un fonctionnement optimal. La détermination du sous-ensemble de tâches de calcul à réaliser sur l'intervalle de temps permet de déterminer le niveau de mobilisation des ressources de calcul de l'infrastructure informatique et ainsi estimer la quantité de chaleur à dissiper sur l'intervalle de temps. La connaissance de la quantité de chaleur à dissiper permet ainsi d'estimer une première puissance électrique de régulation qui sera consommée pour maintenir l'infrastructure informatique dans une première gamme de températures optimale.

Avantageusement, le calcul de l'estimation de puissance électrique délivrable par le réseau électrique prend en compte une demande de réduction de la consommation électrique de l'infrastructure informatique.

La demande de réduction de la consommation électrique peut être envoyée par le fournisseur d'énergie électrique pilotant le réseau de distribution d'énergie électrique pour forcer une baisse de la consommation électrique de l'infrastructure informatique.

Avantageusement, le calcul de l'estimation de puissance électrique délivrable par la source d'énergie électrique locale prend en compte au moins une donnée environnementale.

Le procédé tire ainsi avantageusement partie de données environnementales telles que des prévisions de température, d'ensoleillement ou de vent pouvant avoir une influence sur la production d'énergie électrique par la source d'énergie électrique locale et sur la régulation thermique.

Avantageusement, la source d'énergie électrique locale est avantageusement une source d'énergie renouvelable.

Ainsi, elle permet de réduire l'empreinte carbone de l'infrastructure informatique en diluant l'énergie électrique issu du réseau électrique, potentiellement carbonée, avec l'énergie électrique issu de la source d'énergie renouvelable.

Le procédé selon l'invention trouve notamment un intérêt dans la réduction de l'empreinte carbone de l'infrastructure informatique. En effet, dans un contexte où une partie de la production électrique fournie par le réseau peut comprendre une partie dite carbonée, c'est-à-dire générant du $CO_2$, l'empreinte carbone de l'infrastructure peut s'avérer conséquente.

Avantageusement, la source d'énergie électrique locale comprend une unité de stockage d'énergie électrique configurée pour stocker une quantité d'énergie, et le calcul de l'estimation de la puissance électrique délivrable par la source d'énergie locale est fonction de la quantité d'énergie stockée dans l'unité de stockage d'énergie électrique.

De cette manière, la quantité d'énergie stockée peut être utilisée pour alimenter l'infrastructure informatique et ainsi réduire davantage la consommation d'énergie électrique depuis le réseau électrique. L'unité de stockage d'énergie électrique permet également d'absorber les brèves variations d'énergie du réseau électrique et de la source d'énergie électrique locale, permettant ainsi de relâcher une contrainte de suivi en temps réel de leur niveau de production.

Avantageusement, un excédent de production provenant du réseau électrique et/ou de la source d'énergie électrique locale, non consommé par l'infrastructure informatique sur l'intervalle de temps, est stocké dans l'unité de stockage d'énergie électrique.

Avantageusement, la source d'énergie électrique locale comprend un deuxième système de régulation thermique couplé à l'unité de stockage d'énergie électrique, la détermination du paramétrage comprenant également le paramétrage du deuxième système de régulation thermique.

Avantageusement, un excédent de production de la source d'énergie électrique locale, non consommé par l'infrastructure informatique sur l'intervalle de temps, est envoyé vers le réseau électrique.

Avantageusement, chaque tâche de calcul de l'ensemble de tâches de calcul présente une criticité et la détermination du sous-ensemble de tâches de calcul est fonction de la criticité de chaque tâche de calcul.

Ainsi, lorsque la consommation électrique consommable ne permet par l'exécution de toutes les tâches de calcul sur l'infrastructure informatique, une hiérarchisation par criticité peut être mise en œuvre pour abandonner ou différer l'exécution des tâches de calcul les moins critiques.

Avantageusement, chaque tâche de calcul de l'ensemble de tâches de calcul présente une estimation d'un nombre de ressources nécessaires et la détermination du sous-ensemble de tâches de calcul à exécuter sur l'intervalle de temps est fonction de l'estimation du nombre de ressources nécessaires de chaque tâche de calcul.

Ainsi, lorsque la consommation électrique consommable ne permet pas l'exécution de toutes les tâches sur l'infrastructure informatique, une hiérarchisation par nombre de ressources de calcul nécessaire, et donc par consommation électrique, peut être mise en œuvre pour abandonner ou différer l'exécution des tâches de calcul les plus gourmandes en termes de ressources de calcul.

Avantageusement, le procédé comprend :

- le paramétrage du réseau électrique et de la source d'énergie électrique locale selon le paramétrage estimé ; et

- l'ordonnancement du sous-ensemble de tâches de calcul sur la pluralité de ressources de calcul et le pilotage de la pluralité de ressources de calcul et du premier système de régulation thermique sur l'intervalle de temps.

Avantageusement, l'infrastructure informatique est un supercalculateur.

L'invention concerne également un système d'optimisation de la consommation électrique d'une infrastructure informatique comprenant une pluralité de ressources de calcul et un premier système de régulation thermique, l'infrastructure informatique étant alimentée par un réseau électrique et au moins une source d'énergie électrique locale, l'infrastructure informatique devant exécuter un ensemble de tâches de calcul au moyen de la pluralité de ressources de calcul, le système comprenant :

- un module d'optimisation configuré pour :

  - en fonction d'une puissance électrique consommable estimée, déterminer un sous-ensemble de tâches de calcul de l'ensemble de tâches de calcul à exécuter sur un intervalle de temps et estimer un ordonnancement du sous-ensemble de tâches de calcul sur la pluralité de ressources de calcul et un pilotage de la pluralité de ressources de calcul et du premier système de régulation thermique sur un intervalle de temps ;
  - en fonction de l'ordonnancement et du pilotage estimés, estimer une puissance électrique consommée par l'infrastructure informatique sur l'intervalle de temps ;

- un dispositif de gestion d'énergie configuré pour :

  - calculer une estimation de puissance électrique délivrable par le réseau électrique et une estimation de puissance électrique délivrable par la source d'énergie électrique locale sur l'intervalle de temps ;
  - estimer la puissance électrique consommable par l'infrastructure informatique sur l'intervalle de temps, en fonction de l'estimation de puissance électrique délivrable par le réseau électrique sur l'intervalle de temps et de l'estimation de la puissance électrique délivrable par la source d'énergie électrique locale sur l'intervalle de temps ; et
  - en fonction de la puissance électrique nécessaire estimée, estimer un paramétrage du réseau électrique et de la source d'énergie électrique locale sur l'intervalle de temps,

caractérisé en ce que le calcul de l'estimation de puissance électrique délivrable par le réseau électrique est fonction d'un indice K proportionnel à une quantité de CO2 émise par le réseau électrique pour délivrer une énergie électrique sur l'intervalle de temps.

L'invention concerne également un produit-programme d'ordinateur comprenant des instructions qui, quand le programme est exécuté sur un ordinateur, conduisent celui-ci à mettre en œuvre les étapes du procédé selon l'invention.

Enfin, l'invention concerne un support d'enregistrement lisible par un ordinateur comprenant des instructions qui, lorsqu'elles sont exécutées par un ordinateur, conduisent celui-ci à mettre en œuvre les étapes du procédé selon l'invention.

L'invention et ses différentes applications seront mieux comprises à la lecture de la description qui suit et à l'examen des figures qui l'accompagnent.

## BRÈVE DESCRIPTION DES FIGURES

Les figures sont présentées à titre indicatif et nullement limitatif de l'invention. Sauf précision contraire, un même élément apparaissant sur des figures différentes présente une référence unique.

[FIG.1] représente schématiquement un mode de réalisation d'un système d'optimisation selon l'invention.

[FIG.2] représente schématiquement un exemple de mise en œuvre d'un procédé d'optimisation selon l'invention.

## DESCRIPTION DÉTAILLÉE

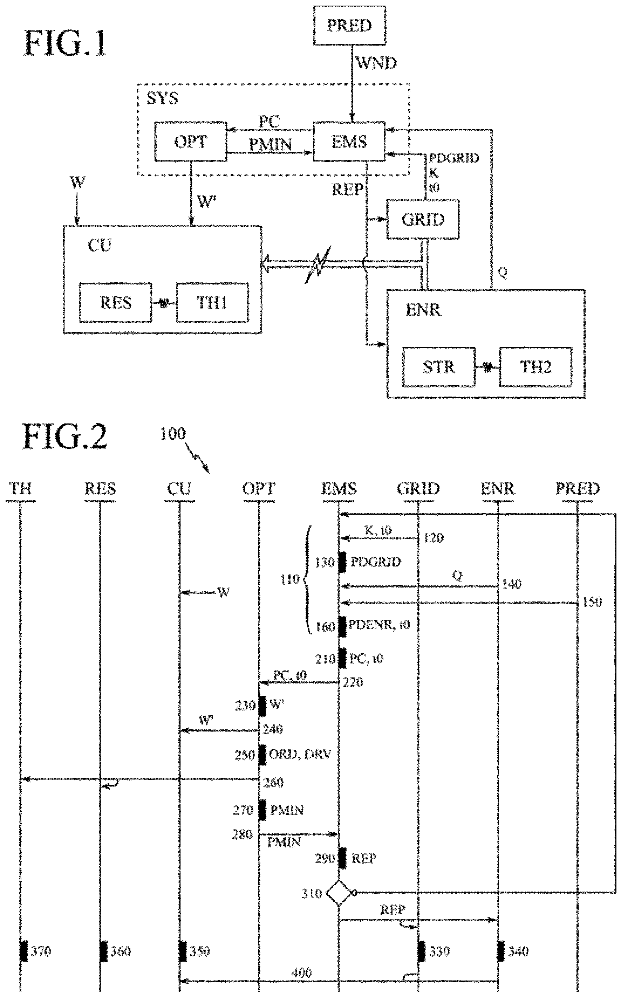

L'invention va être décrite en faisant référence aux [FIG.1] et [FIG.2]. L'invention concerne un procédé 100 d'optimisation de la consommation électrique d'une infrastructure informatique CU devant réaliser un ensemble W de tâches de calcul.

L'infrastructure informatique CU est par exemple un supercalculateur ou un centre de données pour « data center » en anglais.

L'infrastructure informatique CU comprend une pluralité de ressources de calcul RES. Par ressources de calcul RES, on entend par exemple une pluralité de processeurs et de mémoires, par exemple interconnectés en grappe, et configurés pour réaliser des tâches de calcul, telles que des simulations numériques.

L'infrastructure informatique CU comprend également un premier système de régulation thermique TH1. Le premier système de régulation thermique TH1 est avantageusement configuré pour maintenir l'infrastructure informatique CU dans une première gamme de températures optimale, dans laquelle le fonctionnement de l'infrastructure informatique CU est optimal. En effet, l'utilisation des ressources de calcul RES génère un échauffement. Pour réguler la température de l'infrastructure informatique CU, le premier système de régulation TH1 consomme une première puissance électrique de régulation PTH1. Le premier système de régulation thermique TH1 peut également être configuré pour réguler la température d'un bâtiment abritant l'infrastructure informatique CU.

L'infrastructure informatique CU est alimentée en énergie électrique par un réseau électrique GRID et par au moins une source d'énergie électrique locale ENR.

Par réseau électrique GRID, on entend un réseau de distribution d'énergie électrique, par exemple régionale, géré par un fournisseur d'énergie électrique.

Le réseau électrique GRID est avantageusement configuré pour communiquer une estimation PDGRID de la production d'énergie électrique qu'il est en mesure de délivrer sur un intervalle de temps. Cette estimation PDGRID peut par exemple être fournie par le fournisseur d'énergie électrique lui-même, ou par un service tiers de gestion d'énergie électrique couramment appelé agrégateur.

La source d'énergie électrique locale ENR est une source d'énergie électrique différente du réseau électrique GRID et propre à l'infrastructure informatique CU. Il peut s'agir d'une source d'énergie électrique renouvelable tirant partie d'une énergie éolienne, solaire, géothermique, marémotrice ou encore de la combustion de matière sèche telle que le bois. La source d'énergie électrique locale ENR est préférentiellement non carbonée, c'est à dire qu'elle n'émet pas de gaz à effet de serre et plus particulièrement du $CO_2$, pour produire de l'énergie électrique. La source d'énergie électrique locale ENR peut par exemple, comprendre une éolienne, des cellules photovoltaïques ou une pompe à chaleur géothermique.

La source d'énergie locale ENR comprend avantageusement une pluralité de moyens de production d'énergie électrique, considérés comme un ensemble, et contrôlés de manière centralisée, par exemple au moyen d'un automate. Ainsi, une consigne de production électrique envoyée à la source d'énergie locale ENR est répartie entre les différents moyens de production d'énergie. Par exemple, la source d'énergie locale ENR peut comprendre une unité de stockage d'énergie électrique STR configurée pour stocker une quantité d'énergie, telle qu'une batterie.

La source d'énergie électrique locale ENR peut également comprendre une unité de cogénération d'énergie électrique.

Le procédé 100 selon l'invention peut également mettre en œuvre un service de prédiction PRED de données environnementales WND. Les données environnementales WND comprennent par exemple des prévisions météorologiques.

Le procédé 100 d'optimisation selon l'invention est mis en œuvre par un système d'optimisation SYS selon l'invention. Le système SYS comprend notamment :

- un module d'optimisation OPT ; et

- un dispositif de gestion d'énergie EMS.

Le module d'optimisation OPT et le dispositif de gestion d'énergie EMS peuvent être des automates distincts ou des briques informatiques exécutées par un même ordinateur. Le module d'optimisation OPT et le dispositif de gestion d'énergie EMS sont connectés, par exemple, au moyen d'un réseau de télécommunications, de manière à pouvoir échanger des informations. Le module d'optimisation OPT et/ou le dispositif de gestion d'énergies EMS sont également avantageusement connectés au service de prédiction PRED de données environnementales WND.

Le dispositif de gestion d'énergie EMS est également connecté au réseau électrique GRID et à la source d'énergie électrique locale ENR de manière à pouvoir leur envoyer un paramétrage REP.

Le procédé 100 comprend une première étape de calcul 110 d'une estimation de puissance électrique délivrable PDGRID par le réseau électrique GRID et d'une estimation de puissance électrique délivrable PDENR par la source d'énergie électrique locale ENR sur un intervalle de temps t0.

Selon l'exemple de mise en œuvre de la [FIG.2], le dispositif de gestion d'énergie EMS reçoit 120 dans un premier temps des informations de la part du réseau électrique GRID. Les informations peuvent comprendre un intervalle de temps t0 et une puissance électrique que le réseau électrique est capable de fournir pendant l'intervalle de temps t0. Lesdites informations peuvent également comprendre une demande de réduction de la consommation électrique de l'infrastructure informatique CU sur l'intervalle de temps t0. La réception 120 peut faire suite à l'envoi, de la part du dispositif de gestion d'énergie EMS, d'une requête au réseau électrique GRID.

Le dispositif de gestion d'énergie EMS calcule 130 ensuite une estimation d'une puissance électrique délivrable PDGRID par le réseau électrique GRID sur l'intervalle de temps t0. Le calcul 130 prend avantageusement en compte les informations reçues 120 de la part du réseau électrique GRID, par exemple la demande de réduction de la consommation électrique. Dans une variante, le réseau électrique GRID envoie 120 directement l'estimation de la puissance qu'il est en mesure de délivrer PDGRID et l'intervalle de temps t0 pendant lequel il est capable de la délivrer.

La réception 120 d'informations de la part du réseau électrique GRID peut avoir lieu de manière périodique. La période peut être comprise entre une minute et quelques heures, par exemple dix minutes. L'intervalle de temps t0 correspond avantageusement à la période de réception 120 des informations de la part du réseau électrique GRID.

L'intervalle de temps t0 peut également démarrer à chaque réception 120 d'informations de la part du réseau électrique GRID, même lorsque que lesdites réceptions 120 d'informations ne sont pas réalisées périodiquement. La réception 120 d'informations redéclenche avantageusement les étapes du procédé 100 afin de prendre en compte une nouvelle estimation de la puissance délivrable PDGRID par le réseau électrique GRID. Ainsi, lorsque le fournisseur d'énergie électrique gérant le réseau de distribution n'est pas en mesure d'absorber une baisse ou un surplus de production d'électricité sur ledit intervalle de temps t0, il peut envoyer de nouvelles informations au système SYS de sorte que ce dernier puisse optimiser la consommation électrique de l'infrastructure informatique CU en prenant en compte les variations de production.

Le dispositif de gestion d'énergie EMS calcule 160 également l'estimation d'une puissance électrique délivrable PDENR par la source d'énergie électrique locale ENR sur l'intervalle de temps t0. Pour cela, le dispositif de gestion d'énergies EMS prend avantageusement en compte la réception 150 d'au moins une donnée environnementale WND fournie par le service de prédiction PRED. Chaque donnée environnementale WND comprend par exemple l'ensoleillementou la vitesse du vent prévue sur l'intervalle de temps t0 à l'endroit où est située la source d'énergie électrique locale ENR et donc l'infrastructure informatique CU.

Lorsque la source d'énergie électrique locale ENR comprend une unité de stockage d'énergie électrique STR, il est alors avantageux que le dispositif de gestion d'énergie EMS puisse également recevoir 140 une estimation de la quantité d'énergie Q stockée par ladite unité de stockage d'énergie électrique STR. De cette manière, le dispositif de gestion d'énergie EMS est à même de déterminer si une partie de l'énergie électrique stockée peut être utilisée pour alimenter l'infrastructure informatique CU ou si, au contraire, il est préférable de reconstituer le stock d'énergie électrique Q.

Une fois les estimations des puissances délivrables PDGRID, PDENR par le réseau électrique GRID et la source d'énergie électrique locale ENR calculées, le dispositif de gestion d'énergie EMS calcule 210 une estimation d'une puissance électrique consommable PC sur l'intervalle de temps t0 par l'infrastructure informatique CU. La puissance électrique consommable PC est par exemple la puissance totale maximale délivrable par le réseau électrique GRID et la source d'énergie électrique locale ENR et pouvant alimenter l'infrastructure informatique CU lors de la réalisation des tâches W en prenant en compte la consommation du premier système de régulation TH1.

L'estimation de la puissance électrique consommable PC sur l'intervalle de temps t0 et avantageusement l'intervalle de temps t0, sont ensuite envoyés 220 par le dispositif de gestion d'énergie EMS au module d'optimisation OPT.

Dans l'exemple de mise en œuvre de la [FIG.2], le module d'optimisation OPT détermine 230 un sous-ensemble W' de tâches de calcul à exécuter sur l'intervalle de temps t0 à partir de l'ensemble W de tâches de calcul. L'ensemble W de tâches de calcul comprend avantageusement des tâches de calcul en cours d'exécution par l'infrastructure informatique CU mais non terminée ainsi que des tâches de calcul récemment reçues ou dont l'exécution est en attente.

Par exemple, lorsqu'une tâche de calcul de l'ensemble W de tâches de calcul est ajoutée au sous-ensemble de tâche de calcul, alors son exécution est prévue sur l'intervalle de temps t0. Si la tâche de calcul est déjà en cours d'exécution sur l'infrastructure informatique CU, elle continue son exécution sans être perturbée. Une tâche de calcul en attente d'exécution se voit alors planifiée sur l'intervalle de temps t0.

Lorsqu'une tâche de calcul de l'ensemble W n'est pas ajoutée au sous-ensemble de tâche de calcul, alors son exécution n'est pas prévue sur l'intervalle de temps t0. Si la tâche de calcul est déjà en cours d'exécution sur l'infrastructure informatique CU, elle se voit arrêtée ou mise en hibernation. Une tâche de calcul en attente d'exécution se voit reportée à un intervalle de temps ultérieur ou abandonnée.

Un arrêt indique que la tâche de calcul est en cours d'exécution par l'infrastructure informatique CU mais qu'elle doit être arrêtée sur l'intervalle de temps t0.

Une mise en hibernation indique que la tâche de calcul est en cours d'exécution mais doit être arrêtée et qu'une sauvegarde de ladite tâche de calcul au moment de l'arrêt est stockée pour servir de point de départ lors de son redémarrage. Une tâche de calcul simplement arrêtée ne bénéficie pas d'une sauvegarde et son redémarrage, s'il y a lieu, est équivalent à une exécution initiale de ladite tâche.

Une tâche de calcul peut éventuellement être exécutée en mode économie d'énergie, c'est-à-dire que le nombre de ressources de calcul qui lui est alloué est réduit ou que l'énergie consommée par les ressources de calcul lui étant alloués est limitée. Il s'agit par exemple, dans ce dernier cas, d'une limitation de la puissance utilisée, appelé « power capping » en anglais. Il peut également s'agir d'une réduction de la fréquence de travail desdites ressources, telle qu'une de la fréquence des processeurs,

La détermination 230 du sous-ensemble de tâches de calcul est avantageusement fonction d'une estimation d'un gain G, associé à chaque action relative aux tâches de calcul de l'ensemble W de tâches de calcul.

Par exemple, l'exécution en mode économie d'énergie permet de réduire la puissance électrique instantanée consommée par la tâche en question. Le gain $G$ est donc avantageusement positif est préférentiellement opposé à la variation du nombre de ressources alloué à ladite tâche. Il peut être formulé comme

$$G = C_1 - C_2 \propto N_1 - N_2$$

où $C_1$ et $C_2$ sont des estimations de la consommation moyenne de ladite tâche de calcul respectivement hors mode d'économie d'énergie et en mode d'économie d'énergie et $N_1$ et $N_2$ sont par exemple les nombres de ressources de calcul alloués à ladite tâche de calcul respectivement hors mode d'économie d'énergie et en mode d'économie d'énergie.

La mise en hibernation d'une tâche de calcul peut présenter un gain $G$ nul, permettant d'être envisagée sans effet négatif.

L'arrêt d'une tâche de calcul après un instant donné $J$, peut présenter un gain G proportionnel à :

$$G = -(t - J) \times C$$

avec $t$ le temps et $C$ la consommation moyenne de ladite tâche.

Il est avantageux de corriger le gain $G$ par un facteur de risque R de non-réalisation futur permettant de prendre en compte les aléas ayant pour effet de constituer un sous-ensemble W' de tâches de calcul irréalisable sur l'intervalle de temps t0. En effet, l'infrastructure informatique CU peut, en plus des contraintes de consommation électrique, répondre à des contraintes d'utilisation. Il n'est donc pas envisageable d'abandonner ou arrêter systématiquement des tâches de calcul présentant une criticité faible ou modérée dans le seul but de satisfaire les contraintes de consommation. De la même manière, une tâche de calcul ne peut pas voir son exécution repoussée indéfiniment. Pour éviter ces écueils, le risque $R$ de non-réalisation futur peut être défini selon des critères fixés par des utilisateurs de l'infrastructure informatique CU. Le risque $R$ de non-réalisation futur peut être défini à un instant donné et adapté au cours du fonctionnement de l'infrastructure informatique CU. On pourra par exemple utiliser une intelligence artificielle pour estimer le risque $R$.

Un gain total $G_T$ associé à $N$ tâches de calcul de l'ensemble W permet de déterminer l'impact du risque $R$ de non-réalisation futur sur le fonctionnement de l'infrastructure informatique CU et peut être calculé comme suit :

$$G_T = \sum_{i}^{N} g(a_i) - R(a_1, \dots, a_n)$$

où $a_1, \dots, a_n$ représente l'ensemble des actions considérées.

La détermination 230 du sous-ensemble W' de tâche de calcul est fonction de la puissance électrique consommable PC estimée par le dispositif de gestion d'énergie EMS.

Afin d'améliorer la détermination 230 du sous-ensemble W' de tâches de calcul, chaque tâche de calcul de l'ensemble W présente avantageusement une estimation d'un nombre de ressources de calcul RES nécessaires. Il s'agit par exemple, pour chaque tâche de calcul, d'un nombre de processeurs ou de nœuds de calcul requis pour réaliser ladite tâche de calcul. L'estimation du nombre de ressources de calcul RES nécessaires est par exemple renseignée par un utilisateur lorsqu'il soumet ladite tâche de calcul à l'infrastructure numérique CU. L'estimation du nombre de ressources de calcul RES nécessaires peut également être calculée par un automate spécifique, par exemple basé sur une intelligence artificielle.

La détermination 230 du sous-ensemble W' de tâches de calcul est alors avantageusement basée sur l'estimation du nombre de ressources RES nécessaires pour chaque tâche de calcul de l'ensemble W de tâches de calcul.

La détermination 230 du sous-ensemble W' de tâches de calcul peut également être basée sur le type de ressources de calcul RES à attribuer à chaque tâche de calcul. En effet, le temps d'exécution de certaines tâches de calcul peut être limité par le nombre de ressources de calcul RES de type processeur ou le nombre de ressources de calcul RES de type mémoire. On parle dans le premier cas de *CPU-bound* en anglais et dans le deuxième cas de *memory-bound* en anglais.

La détermination 230 du sous-ensemble W' de tâches de calcul peut également estimer une consommation énergétique pour chaque tâche de calcul de l'ensemble W. L'estimation de la consommation énergétique permet ainsi de déterminer la consommation énergétique totale nécessaire à la réalisation du sous-ensemble W' de tâches de calcul.

L'estimation de la consommation énergétique pour chaque tâche de calcul est par exemple basée sur un nombre de ressources de calcul RES nécessaires et une durée prévisionnelle de calcul. Ledit nombre de ressources de calcul et la durée prévisionnelle peuvent être renseignés par un utilisateur lorsqu'il soumet une tâche de calcul à l'infrastructure informatique CU.

L'estimation de la consommation énergétique pour chaque tâche de calcul peut également être basée sur la mesure, après exécution, de l'énergie effectivement consommée par des tâches de calcul similaires. D'ailleurs, ladite estimation met avantageusement en œuvre une intelligence artificielle pour, d'une part classer des tâches résolues en fonction de leur consommation énergétique et, d'autre part déterminer la consommation énergétique pour chaque tâche de calcul de l'ensemble W de tâche de calcul à partir des tâches résolues classées.

Chaque tâche de calcul de l'ensemble W de tâches de calcul peut également présenter une criticité. Ainsi, la détermination 230 du sous-ensemble W' de tâches de calcul peut prendre en compte la criticité de chaque tâche de calcul de l'ensemble W. Par exemple, une criticité élevée peut indiquer qu'une tâche devrait se terminer avec succès avant un instant donné. Aussi, une tâche de calcul présentant une criticité élevée est donc préférentiellement ajoutée au sous-ensemble W' de tâche de calcul à exécuter sur l'intervalle de temps. Une tâche de calcul de criticité moyenne peut par exemple être mise en hibernation ou arrêtée et relancer en moins d'un jour. Une tâche de calcul de criticité basse peut par exemple être arrêtée, sans contrainte sur une durée avant redémarrage de ladite tâche, ou alors abandonnée, c'est à dire retirée de l'ensemble W de tâches de calcul.

Le sous-ensemble W' de tâches de calcul est envoyé 240 à l'infrastructure informatique CU afin d'être ordonnancé sur les ressources de calcul RES.

Selon l'exemple de mise en œuvre de la [FIG.2], le module optimisation OPT estime 250 un ordonnancement ORD du sous-ensemble W' de tâches de calcul sur la pluralité de ressources de calcul RES. Il s'agit d'affecter à chaque ressource de calcul RES un ensemble de tâches de calcul ordonné en fonction du temps. L'estimation de l'ordonnancement ORD prend avantageusement en compte les actions liées à chaque tâche de calcul et notamment les tâches de calcul pouvant être exécutées en mode économie d'énergie.

Le module optimisation OPT estime 250 également un pilotage DRV de la pluralité de ressources de calcul RES. Il s'agit par exemple de déterminer l'état de chaque ressource de calcul RES de la pluralité de ressources de calcul RES de l'infrastructure informatique CU.

Le pilotage DRV des ressources de calcul RES peut comprendre au moins l'une des actions suivantes :

- démarrer une ressource de calcul ;

- mettre en hibernation une ressource de calcul ;

- arrêter une ressource de calcul.

Ainsi, chaque ressource de calcul RES non allouée à l'exécution des tâches de calcul du sous-ensemble W' de tâches calcul peut être mise en hibernation ou arrêtée, permettant ainsi de réduire la puissance consommée par l'infrastructure informatique CU.

L'estimation 250 du pilotage DRV peut également être fonction d'un gain *G* associée à chaque action de pilotage DRV. Par exemple, l'arrêt d'une ressource de calcul peut être définie comme :

$$G = C_{\text{actif}} \times d - P$$

où $C_{\text{actif}}$ est la consommation de la ressource de calcul RES active ou démarrée et d est l'estimation de la durée pendant laquelle l'arrêt est prévu. P est une pénalité, par exemple une constante positive, rendant compte du temps de redémarrage de ladite ressource de calcul RES et d'une probabilité de non-redémarrage associée.

Le gain de la mise en hibernation d'une ressource de calcul peut être définie comme :

$$G = (C_{\text{actif}} - C_{\text{veille}}) \times d - P$$

où $C_{\text{veille}}$ est la consommation de la ressource de calcul RES en mode veille.

Le gain *G* permettant l'estimation 250 du pilotage DRV peut également être corrigé au moyen d'un risque. En effet, l'estimation du pilotage DRV peut consister à démarrer ou arrêter des ressources de calcul RES de manière très fréquente, voire agressive, pour réduire la consommation énergétique associée. Toutefois, il existe une probabilité que les ressources de calcul ne redémarrent pas correctement. La correction du gain au moyen d'un risque permet ainsi de réduire le nombre d'arrêt/démarrage et préserver ainsi les ressources de calcul RES.

Le procédé comprend également l'estimation 250 du pilotage DRV du premier système de régulation thermique TH1. En effet, la puissance électrique consommée par chaque ressource de calcul RES est en partie dissipée sous forme de chaleur. Le premier système de régulation TH1 permet ainsi de réguler la température de l'infrastructure informatique CU et plus particulièrement la température de chaque ressource de calcul RES de sorte qu'elle soit maintenue dans la première gamme de températures optimale.

L'estimation 250 du pilotage DRV du premier système de régulation thermique TH1 prend par exemple en compte la dissipation énergétique de chaque ressource de calcul RES en fonction de l'état dans lequel elle se trouve, par exemple active, en veille ou en hibernation, et arrêtée. Le pilotage DRV du premier système de régulation thermique TH1 permet ainsi de déterminer la chaleur totale à dissiper et donc une première puissance électrique de régulation PTH1.

De plus, l'estimation 250 du pilotage DRV peut avantageusement prendre en compte au moins une donnée environnementale WND fournie par le service de prédiction PRED. Par exemple, si le premier système de régulation TH1 est une machine thermique échangeant de la chaleur avec l'air extérieur à l'infrastructure informatique CU, alors la donnée environnementale considérée comprend avantageusement la température et le taux d'humidité de l'air extérieur. Ainsi, si l'air extérieur est chaud et sec, la première puissance électrique de régulation PTH1 à consommer sera plus importante que lorsque l'air extérieur est frais et humide.

Le procédé 100 comprend également, en fonction de l'ordonnancement ORD et du pilotage DRV précédemment estimés, l'estimation 270 d'une puissance électrique nécessaire PMIN pour garantir le fonctionnement de l'infrastructure informatique CU sur l'intervalle de temps t0 et permettre la réalisation du sous-ensemble W' de tâches de calcul. La puissance électrique nécessaire PMIN assure notamment l'alimentation électrique de chaque ressource de calcul RES et du premier système de régulation TH1 sur l'intervalle de temps t0.

L'estimation 270 de ladite puissance nécessaire PMIN est par avantageusement fonction du sous-ensemble W' de tâches de calcul, et de l'ordonnancement ORD et du pilotage DRV précédemment estimés. Ladite puissance nécessaire PMIN correspond par exemple à la somme de la puissance estimée pour chaque ressource de calcul RES en fonction de son état sur l'intervalle de temps t0 et de la première puissance de régulation thermique PHT1.

La puissance électrique nécessaire PMIN est ensuite communiquée 280 au dispositif de gestion d'énergie EMS afin de déterminer 290 un paramétrage REP. Le paramétrage REP correspond par exemple à :

- la puissance électrique à délivrer par le réseau électrique GRID sur l'intervalle de temps t0 ; et

- la puissance électrique à délivrer par la source d'énergie électrique locale ENR sur l'intervalle de temps t0.

Il s'agit par exemple d'une consigne de production envoyée au réseau électrique GRID et à la source d'énergie électrique locale ENR. Le paramétrage REP comprend avantageusement une consigne de gestion envoyée à l'unité de stockage d'énergie électrique STR lorsque la source d'énergie électrique locale ENR en comprend une. Ladite consigne est par exemple de déstocker de l'énergie électrique, conjointement à la source d'énergie électrique locale ENR et au réseau électrique GRID, ou au contraire de stocker une partie de l'énergie électrique produite par la source d'énergie électrique locale ENR et/ou le réseau électrique GRID.

Le paramétrage REP est déterminé 290 en fonction de la puissance électrique nécessaire PMIN précédemment estimée. Selon l'exemple de mise en œuvre de la [FIG.2], la détermination 290 du paramétrage REP est réalisée par le dispositif de gestion d'énergie EMS. Elle prend avantageusement en compte la puissance consommable PC et/ou la puissance nécessaire PMIN sur l'intervalle de temps t0. Elle peut également prendre en compte la quantité d'énergie stockée dans l'unité de stockage d'énergie électrique STR de la source d'énergie électrique locale ENR.

Lorsque le paramétrage REP estimé permet de fournir l'estimation de puissance électrique nécessaire PMIN estimée, le paramétrage REP est avantageusement envoyé au réseau électrique GRID et à la source d'énergie électrique locale ENR.

Toutefois, le procédé 100 comprend avantageusement une étape de contrôle 310 permettant de déterminer si le paramétrage REP estimé permet de fournir l'estimation de puissance électrique nécessaire PMIN estimée. Dans la négative, le procédé 100 comprend avantageusement une mise à jour de l'estimation de puissance électrique consommable PC sur l'intervalle de temps t0. Cette mise à jour comprend par exemple une répétition de :

- la première étape de calcul 110 des estimations des puissances électriques délivrables PDGRID, PDENR par le réseau électrique GRID et la source d'énergie électrique locale ENR sur un intervalle de temps t0 ;

- le calcul 210 de l'estimation de la puissance électrique consommable PC sur l'intervalle de temps t0 ; et

- la détermination 290 du paramétrage REP ;

telles que décrites précédemment. En effet, les conditions de production énergétique peuvent avoir changées depuis la dernière réalisation de la première étape de calcul 110 et une nouvelle détermination 290 du paramétrage REP peut permettre de satisfaire l'étape de contrôle 310.

Lorsque l'étape de contrôlé 310 n'est pas satisfaite avec les estimations mises à jour, le procédé 100 comprend avantageusement un déclenchement des étapes 230, 250, 270 permettant d'obtenir une mise à jour de la puissance électrique nécessaire PMIN.

L'obtention d'un paramétrage REP et d'une puissance électrique nécessaire PMIN compatibles entre eux peut représenter un problème d'optimisation combinatoire. Il est alors avantageux de résoudre ledit problème optimisation combinatoire en recourant par exemple à une méthode heuristique, par exemple suivant une méthode d'essais-erreurs à partir de propositions aléatoires.

Par exemple, une pluralité de sous-ensemble W' de tâches de calcul peut être déterminée 230, chaque sous-ensemble W' étant obtenu de manière aléatoire. Une estimation de la puissance électrique nécessaire PMIN est avantageusement estimée 270 à partir de chaque sous-ensemble W' de tâches de calcul. Un ordonnancement ORD et un pilotage DRV sont avantageusement déterminés 250 pour chaque sous-ensemble W'. Une comparaison de chaque puissance électrique nécessaire PMIN avec un paramétrage REP précédemment estimé permet de déterminer au moins un sous-ensemble W' satisfaisant ledit paramétrage REP.

Il est également envisageable de déterminer 290 une pluralité de paramétrages REP, par exemple de manière aléatoire. Une comparaison de chaque paramétrage REP par rapport à chaque puissance électrique nécessaire PMIN permet ainsi de déterminer au moins un sous-ensemble W' satisfaisant au moins un paramétrage REP.

Il peut également être avantageux de résoudre le problème d'optimisation combinatoire au moyen d'une intelligence artificielle, mettant par exemple en œuvre un apprentissage par renforcement.

Lorsque le paramétrage REP permet de fournir l'estimation de la puissance électrique nécessaire PMIN, le réseau électrique GRID et la source d'énergie électrique locale ENR reçoivent 320 le paramétrage REP. Ils délivrent 330, 340 alors chacun une puissance électrique en fonction du paramétrage REP précédemment déterminé, alimentant 400 ainsi l'infrastructure informatique CU.

L'ordonnancement ORD estimé est envoyé 260 à l'infrastructure informatique CU afin d'ordonnancer 350 les tâches de calcul du sous-ensemble W' de tâches de calcul.

Le pilotage DRV est estimé est également envoyé 260 à l'infrastructure informatique CU de manière à implémenter 360, 370 le pilotage DRV estimé sur la pluralité de ressources de calcul RES et le premier système de régulation TH1.

Le paramétrage REP déterminé par le dispositif de gestion d'énergie peut comprendre le stockage d'un excédent provenant du réseau GRID et/ou de la source d'énergie électrique locale ENR par l'unité de stockage d'énergie électrique STR. L'unité de stockage d'énergie électrique STR peut également être configuré pour stocker un excédent d'énergie électrique de la source d'énergie électrique locale ENR.

Par excédent de production ou simplement excédent, on entend la différence entre la puissance instantanée produite par le réseau et/ou la source d'énergie électrique locale et la puissance instantanée consommée par l'infrastructure informatique. Lorsque l'excédent est à stocker par l'unité de stockage d'énergie électrique, il ne comprend avantageusement pas l'énergie provenant de ladite unité de stockage d'énergie électrique.

La source d'énergie électrique locale ENR peut également comprendre un deuxième système de régulation thermique couplé à l'unité de stockage d'énergie électrique STR. Le deuxième système de régulation thermique permet par exemple de maintenir la température de l'unité de stockage STR dans une deuxième gamme de températures optimales sur l'intervalle de temps t0. Pour une batterie, la gamme de températures optimales s'étend par exemple de 10 °C à 35 °C. Le deuxième système de régulation thermique consomme donc une deuxième puissance électrique de régulation afin de maintenir la température de l'unité de stockage STR dans une deuxième gamme optimale de températures optimisant le fonctionnement de l'unité de stockage STR. L'estimation 290 du paramétrage REP prend avantageusement en compte une deuxième puissance de régulation PTH2 permettant de maintenir l'unité de stockage d'énergie électrique STR dans une deuxième gamme de températures optimale.

Selon l'invention, le calcul 110 de l'estimation de la puissance électrique délivrable par le réseau électrique GRID est fonction d'un indice K. Ledit indice K est relatif à l'énergie électrique produite par le réseau électrique GRID. L'indice K est par exemple proportionnel à une quantité de $CO_2$ émise par le réseau électrique pour délivrer une énergie électrique sur l'intervalle de temps. Il peut être exprimé en gramme de $CO_2$/kWh. On peut alors parler d'empreinte carbone de la production électrique. Ledit indice K peut également être proportionnel à la difficulté d'approvisionnement de l'énergie électrique délivrée par le réseau électrique, il correspond par exemple à un prix de l'électricité indiqué dans une unité monétaire. L'indice K est par exemple obtenu lorsque le dispositif de gestion d'énergie EMS reçoit 120 des informations de la part du réseau électrique GRID.

Une variation de l'indice K, ou une valeur de l'indice K atteignant un seuil prédéterminé, peut induire un nouvel envoi 120 d'informations de la part du réseau électrique GRID au dispositif de gestion EMS. Le nouvel envoi 120 comprend par exemple une nouvelle demande de réduction de la consommation électrique sur l'intervalle de temps t0. De cette manière, l'estimation de la puissance électrique consommable PC par l'infrastructure informatique CU peut être adaptée en fonction des variations de l'indice K. Par exemple, la puissance électrique consommable PC peut être réduite lorsque l'empreinte carbone de la production électrique est élevée. À l'inverse la puissance électrique consommable PC peut être augmentée, par exemple en priorisant des tâches énergivores ou en stockant de l'énergie, lorsque ladite empreinte est faible. Selon ce même raisonnement, la puissance électrique consommable PC peut être adaptée au prix de l'électricité.

Le calcul 110 de l'estimation de la puissance électrique délivrable PDGRID par le réseau électrique GRID peut avantageusement prendre en compte la quantité de $CO_2$ qui pourrait être produite sur l'intervalle de temps t0 pour alimenter l'infrastructure informatique CU. Il est ainsi possible de limiter la quantité de $CO_2$ émise pour réaliser les tâches de calcul, réduisant de fait l'empreinte carbone de l'infrastructure informatique CU.

Il devient également possible d'exécuter des tâches de calcul énergivores lorsque l'indice K est faible. Ainsi, les tâches énergivores présentent une empreinte carbone maîtrisée. Le même raisonnement peut s'appliquer au prix de l'électricité, permettant d'exécuter des tâches de calcul énergivores lorsque le prix est faible.

L'indice K peut être pris en compte dans la détermination 230 du sous-ensemble W' de tâches de calcul permettant de limiter le nombre de tâches de calcul à exécuter sur l'intervalle de temps t0, par exemple lorsque la quantité de $CO_2$ associée à leur réalisation est trop élevée, c'est-à-dire supérieure à un seuil.

L'indice K peut également être pris en compte dans la détermination 290 du paramétrage REP du réseau électrique GRID et de la source d'énergie électrique locale ENR. Par exemple, un paramétrage REP déterminé pour un indice K élevé pourra utiliser préférentiellement une partie de l'énergie stockée dans l'unité de stockage d'énergie électrique STR. Au contraire, un paramétrage REP déterminé pour un indice K faible pourra stocker préférentiellement une partie de l'énergie produite par le réseau électrique GRID dans l'unité de stockage d'énergie électrique STR.

Pour reprendre un exemple précédemment discuté, une variation de l'indice K, ou une valeur de l'indice K atteignant un seuil prédéterminé peut induire un paramétrage REP tel que la puissance électrique produite à partir du réseau GRID et/ou la source d'énergie locale ENR soit supérieure à la puissance électrique nécessaire PMIN. De la sorte, un excédent de production électrique est généré et peut être stocké afin d'être réutilisé plus tard. L'énergie électrique peut ainsi être stockée lorsqu'elle est peu onéreuse ou encore lorsque son empreinte carbone est faible.

La détermination 230 du sous-ensemble de tâches de calcul est avantageusement fonction d'une estimation d'un gain $G$, associé à chaque action relative aux tâches de calcul ajoutée ou non au sous-ensemble W' de tâche à exécuter sur l'intervalle de temps t0. Le gain $G$ peut également être proportionnelle à l'indice K. Par exemple, le lancement d'une tâche de calcul énergivore lorsque l'indice K est inférieur à un indice seuil Ks correspond un gain $G$ :

$$G = C_{\max} \times d \times (K_S - K)$$

où $d$ est l'estimation de la durée à consommation maximum $C_{\max}$,

**Revendications**

1. Procédé (100) d'optimisation de la consommation d'énergie électrique d'une infrastructure informatique (CU) comprenant une pluralité de ressources de calcul (RES) et un premier système de régulation thermique (TH1), l'infrastructure informatique (CU) étant alimentée par un réseau électrique (GRID) et au moins une source d'énergie électrique locale (ENR), l'infrastructure informatique (CU) devant exécuter un ensemble (W) de tâches de calcul au moyen de la pluralité de ressources de calcul (RES), le procédé (100) comprenant les étapes suivantes :

   - calcul (110) d'une estimation de puissance électrique délivrable (PDGRID) par le réseau électrique (GRID) et d'une estimation de puissance électrique délivrable (PDENR) par la source d'énergie électrique locale (ENR) sur un intervalle de temps (t0) ;
   - estimation (210) d'une puissance électrique consommable (PC) par l'infrastructure informatique (CU) sur l'intervalle de temps (t0), en fonction de l'estimation de puissance électrique délivrable (PDGRID) par le réseau électrique (GRID) sur l'intervalle de temps (t0) et de l'estimation de la puissance électrique délivrable (PDENR) par la source d'énergie électrique locale (ENR) sur l'intervalle de temps (t0) ;
   - en fonction de la puissance électrique consommable (PC) estimée, détermination (230) d'un sous-ensemble (W') de tâches de calcul de l'ensemble (W) de tâches de calcul à exécuter sur l'intervalle de temps (t0), et estimation (250) d'un ordonnancement (ORD) du sous-ensemble (W') de tâches de calcul sur la pluralité de ressources de calcul (RES) et d'un pilotage (DRV) de la pluralité de ressources de calcul (RES) et du premier système de régulation thermique (TH1) sur l'intervalle de temps (t0) ;
   - en fonction de l'ordonnancement (ORD) et du pilotage (DRV) estimés, estimation (270) d'une puissance électrique nécessaire (PMIN) à l'infrastructure informatique (CU) sur l'intervalle de temps (t0) ;
   - en fonction de la puissance électrique nécessaire (PMIN) estimée, détermination (290) d'un paramétrage (REP) du réseau électrique (GRID) et de la source d'énergie électrique locale (ENR) pour l'intervalle de temps,

   **caractérisé en ce que** le calcul de l'estimation de puissance électrique délivrable (PDGRID) par le réseau électrique (GRID) est fonction d'un indice K proportionnel à une quantité de $CO_2$ émise par le réseau électrique (GRID) pour délivrer une énergie électrique sur l'intervalle de temps (t0).

2. Procédé (100) selon la revendication précédente, dans lequel le calcul (110) de l'estimation de puissance électrique délivrable (PDGRID) par le réseau électrique (GRID) prend en compte une demande de réduction de la consommation électrique de l'infrastructure informatique (CU).

3. Procédé (100) selon l'une des revendications précédentes, dans lequel le calcul (110) de l'estimation de puissance électrique délivrable (PDENR) par la source d'énergie électrique locale (ENR) prend en compte au moins une donnée environnementale (WND).

4. Procédé (100) selon l'une des revendications précédentes, dans lequel la source d'énergie électrique locale (ENR) est une source d'énergie renouvelable.

5. Procédé (100) selon l'une des revendications précédentes, dans lequel la source d'énergie électrique locale (ENR) comprend une unité de stockage d'énergie électrique (STR) configurée pour stocker une quantité d'énergie, et dans lequel le calcul (110) de l'estimation de la puissance électrique délivrable (PDENR) par la source d'énergie locale (ENR) est fonction de la quantité d'énergie stockée (Q) dans l'unité de stockage d'énergie électrique (STR).

6. Procédé (100) selon la revendication précédente, dans lequel un excédent de production provenant du réseau électrique (GRID) et/ou de la source d'énergie électrique locale (ENR), non consommé par l'infrastructure informatique (CU) sur l'intervalle de temps (t0), est stocké dans l'unité de stockage d'énergie électrique (STR).

7. Procédé (100) selon l'une des deux revendications précédentes, dans lequel la source d'énergie électrique locale (ENR) comprend un deuxième système de régulation thermique (TH2) couplé à l'unité de stockage d'énergie électrique (STR), la détermination (290) du paramétrage (REP) comprenant également le paramétrage du deuxième système de régulation thermique (PTH2).

8. Procédé (100) selon l'une des revendications précédentes, dans lequel un excédent de production de la source d'énergie électrique locale (ENR) , non consommé par l'infrastructure informatique (CU) sur l'intervalle de temps (t0), est envoyé vers le réseau électrique (GRID).

9. Procédé (100) selon l'une des revendications précédentes, dans lequel chaque tâche de calcul de l'ensemble (W) de tâches de calcul présente une criticité et dans lequel la détermination (130) du sous-ensemble (W') de tâches de calcul est fonction de la criticité de chaque tâche de calcul.

10. Procédé (100) selon l'une des revendications précédentes, dans lequel chaque tâche de calcul de l'ensemble (W) de tâches de calcul présente une estimation d'un nombre de ressources nécessaires et dans lequel la détermination (130) du sous-ensemble (W') de tâches de calcul à exécuter sur l'intervalle de temps (t0) est également fonction de l'estimation du nombre de ressources nécessaire de chaque tâche de calcul.

11. Procédé (100) selon l'une des revendications précédentes, comprenant en outre :

- paramétrage (320) du réseau électrique (GRID), de la source d'énergie électrique locale (ENR) et du système de régulation thermique (TH) selon le paramétrage estimé ; et
- ordonnancement du sous-ensemble (W') de tâches de calcul sur la pluralité de ressources de calcul (RES) et le pilotage de la pluralité de ressources de calcul (RES) et du premier système de régulation thermique sur l'intervalle de temps (t0).

12. Procédé (100) selon l'une des revendications précédentes, **caractérisé en ce que** l'infrastructure informatique (CU) est un supercalculateur.

13. Système d'optimisation (SYS) de la consommation électrique d'une infrastructure informatique (CU) comprenant une pluralité de ressources de calcul (RES) et un premier système de régulation thermique (TH1), l'infrastructure informatique (CU) étant alimentée par un réseau électrique (GRID) et une source d'énergie électrique locale (ENR), et devant exécuter un ensemble de tâches de calcul (W) au moyen de la pluralité de ressources de calcul (RES), le système (SYS) comprenant :

- un module d'optimisation (OPT) configuré pour :

- en fonction d'une puissance électrique consommable (PC) estimée, déterminer (130) un sous-ensemble (W') de tâches de calcul de l'ensemble (W) de tâches de calcul à exécuter sur un intervalle de temps et estimer (140) un ordonnancement du sous-ensemble (W') de tâches de calcul sur la pluralité de ressources de calcul (RES) et un pilotage de la pluralité de ressources de calcul (RES) et du premier système de régulation thermique (TH1) sur l'intervalle de temps ;
- en fonction de l'ordonnancement et du pilotage estimés, estimer (150) une puissance électrique consommée (PMIN) par l'infrastructure informatique (CU) sur l'intervalle de temps ;

- un dispositif de gestion d'énergie (EMS) configuré pour :

- calculer (110) une estimation de puissance électrique délivrable (PDGRID) par le réseau électrique (GRID) et une estimation de puissance électrique délivrable (PDENR) par la source d'énergie électrique locale (ENR) sur l'intervalle de temps ;
- estimer (120) la puissance électrique consommable (PC) par l'infrastructure informatique (CU) sur l'intervalle de temps, en fonction de l'estimation de puissance électrique délivrable (PDGRID) par le réseau électrique (GRID) sur l'intervalle de temps et de l'estimation de la puissance électrique délivrable (PDENR) par la source d'énergie électrique locale (ENR) sur l'intervalle de temps ; et
- en fonction de la puissance électrique nécessaire (PMIN) estimée, estimer (160) un paramétrage (REP) du réseau électrique (GRID) et de la source d'énergie électrique locale (ENR) sur l'intervalle de temps,

**caractérisé en ce que** le calcul de l'estimation de puissance électrique (PDGRID) par le réseau électrique (GRID) est fonction d'un indice K proportionnel à une quantité de $CO_2$ émise par le réseau électrique (GRID) pour délivrer une énergie électrique sur l'intervalle de temps (t0)

14. Produit-programme d'ordinateur comprenant des instructions qui, quand le programme est exécuté sur un ordinateur, conduisent celui-ci à mettre en œuvre les étapes du procédé (100) selon l'une des revendications 1 à 12.

15. Support d'enregistrement lisible par un ordinateur comprenant des instructions qui, lorsqu'elles sont exécutées par un ordinateur, conduisent celui-ci à mettre en œuvre les étapes du procédé selon l'une quelconque des revendications 1 à 12.

**Patentansprüche**

1. Verfahren (100) zum Optimieren des Verbrauchs an elektrischer Energie einer Computerinfrastruktur (CU), die eine Vielzahl von Rechenressourcen (RES) und ein erstes Wärmeregulierungssystem (TH1) umfasst, wobei die Computerinfrastruktur (CU) von einem Stromnetz (GRID) und mindestens einer lokalen Stromquelle (ENR) mit Strom versorgt wird und die Computerinfrastruktur (CU) eine Menge (W) von Rechenaufgaben mittels der Vielzahl von Rechenressourcen (RES) ausführen muss, wobei das Verfahren (100) die folgenden Schritte umfasst:

   - Berechnen (110) einer Schätzung der durch das Stromnetz (GRID) lieferbaren elektrischen Leistung (PDGRID) und einer Schätzung der durch die lokale Stromquelle (ENR) lieferbaren elektrischen Leistung (PDENR) in einem Zeitintervall (t0);
   - Schätzen (210) einer durch die Computerinfrastruktur (CU) verbrauchbaren elektrischen Leistung (PC) in dem Zeitintervall (t0) in Abhängigkeit von der Schätzung der durch das Stromnetz (GRID) lieferbaren elektrischen Leistung (PDGRID) in dem Zeitintervall (t0) und der Schätzung der durch die lokale Stromquelle (ENR) lieferbaren elektrischen Leistung (PDENR) in dem Zeitintervall (t0);
   - in Abhängigkeit von der geschätzten verbrauchbaren elektrischen Leistung (PC), Bestimmen (230) einer Teilmenge (W') von Rechenaufgaben aus der Menge (W) von Rechenaufgaben, die in dem Zeitintervall (t0) ausgeführt werden sollen, und Schätzen (250) einer Planung (ORD) der Teilmenge (W') von Rechenaufgaben auf der Vielzahl von Rechenressourcen (RES) und einer Steuerung (DRV) der Vielzahl von Rechenressourcen (RES) und des ersten Wärmeregulierungssystems (TH1) in dem Zeitintervall (t0);
   - in Abhängigkeit von der geschätzten Planung (ORD) und Steuerung (DRV), Schätzen (270) einer von der Computerinfrastruktur (CU) benötigten elektrischen Leistung (PMIN) in dem Zeitintervall (t0);
   - in Abhängigkeit von der geschätzten benötigten elektrischen Leistung (PMIN), Bestimmen (290) einer Parametrierung (REP) des Stromnetzes (GRID) und der lokalen elektrischen Energiequelle (ENR) für das Zeitintervall,

   **dadurch gekennzeichnet, dass** das Berechnen der Schätzung der durch das Stromnetz (GRID) lieferbaren elektrischen Leistung (PDGRID) in Abhängigkeit von einem Index K erfolgt, der proportional zu einer CO2-Menge ist, die vom Stromnetz (GRID) zur Lieferung elektrischer Energie in dem Zeitintervall (t0) emittiert wird.

2. Verfahren (100) nach dem vorhergehenden Anspruch, wobei das Berechnen (110) der Schätzung der durch das Stromnetz (GRID) lieferbaren elektrischen Leistung (PDGRID) eine Anforderung zur Reduzierung des Stromverbrauchs der Computerinfrastruktur (CU) berücksichtigt.

3. Verfahren (100) nach einem der vorhergehenden Ansprüche, wobei das Berechnen (110) der Schätzung der durch die lokale Stromquelle (ENR) lieferbaren elektrischen Leistung (PDENR) mindestens eine Umweltdatenangabe (WND) berücksichtigt.

4. Verfahren (100) nach einem der vorhergehenden Ansprüche, wobei die lokale elektrische Energiequelle (ENR) eine erneuerbare Energiequelle ist.

5. Verfahren (100) nach einem der vorhergehenden Ansprüche, wobei die lokale elektrische Energiequelle (ENR) eine Stromspeichereinheit (STR) umfasst, die zum Speichern einer Energiemenge konfiguriert ist, und wobei das Berechnen (110) der Schätzung der durch die lokale Energiequelle (ENR) lieferbaren elektrischen Leistung (PDENR) von der in der Stromspeichereinheit (STR) gespeicherten Energiemenge (Q) abhängig ist.

6. Verfahren (100) nach dem vorhergehenden Anspruch, wobei ein Produktionsüberschuss aus dem Stromnetz (GRID) und/oder aus der lokalen Stromquelle (ENR), der von der Computerinfrastruktur (CU) nicht in dem Zeitintervall (t0) verbraucht wird, in der Stromspeichereinheit (STR) gespeichert wird.

7. Verfahren (100) nach einem der beiden vorhergehenden Ansprüche, wobei die lokale Stromquelle (ENR) ein zweites Wärmeregulierungssystem (TH2) umfasst, das mit der Stromspeichereinheit (STR) gekoppelt ist, wobei das Bestimmen (290) der Parametrierung (REP) ferner das Parametrieren des zweiten Wärmeregulierungssystems (PTH2) umfasst.

8. Verfahren (100) nach einem der vorhergehenden Ansprüche, wobei eine Überschussproduktion der lokalen Stromquelle (ENR), die in dem Zeitintervall (t0) nicht von der Computerinfrastruktur (CU) verbraucht wird, an das Stromnetz (GRID) gesendet wird.

9. Verfahren (100) nach einem der vorhergehenden Ansprüche, wobei jede Rechenaufgabe aus der Menge (W) von Rechenaufgaben eine Kritikalität aufweist und wobei das Bestimmen (130) der Teilmenge (W') von Rechenaufgaben von der Kritikalität jeder Rechenaufgabe abhängt.

10. Verfahren (100) nach einem der vorhergehenden Ansprüche, wobei jede Rechenaufgabe aus der Menge (W) von Rechenaufgaben eine Schätzung einer Anzahl benötigter Ressourcen aufweist und wobei das Bestimmen (130) der Teilmenge (W') von Rechenaufgaben, die in dem Zeitintervall (t0) ausgeführt werden sollen, ferner von der Schätzung der Anzahl benötigter Ressourcen für jede Rechenaufgabe abhängt.

11. Verfahren (100) nach einem der vorhergehenden Ansprüche, ferner umfassend:

   - Parametrieren (320) des Stromnetzes (GRID), der lokalen Stromquelle (ENR) und des Wärmeregulierungssystems (TH) gemäß der geschätzten Parametrierung; und
   - Planen der Teilmenge (W') von Rechenaufgaben aus der Vielzahl von Rechenressourcen (RES) und Steuern der Vielzahl von Rechenressourcen (RES) und des ersten Wärmeregulierungssystems in dem Zeitintervall (t0).

12. Verfahren (100) nach einem der vorhergehenden Ansprüche,
   **dadurch gekennzeichnet, dass** die Computerinfrastruktur (CU) ein Superrechner ist.

13. System zum Optimieren (SYS) des Stromverbrauchs einer Computerinfrastruktur (CU), die eine Vielzahl von Rechenressourcen (RES) und ein erstes Wärmeregulierungssystem (TH1) umfasst, wobei die Computerinfrastruktur (CU) von einem Stromnetz (GRID) und einer lokalen Stromquelle (ENR) mit Strom versorgt wird und eine Menge von Rechenaufgaben (W) mittels der Vielzahl von Rechenressourcen (RES) ausführen soll, wobei das System (SYS) Folgendes umfasst:

   - ein Optimierungsmodul (OPT), das konfiguriert ist zum:

      - in Abhängigkeit von einer geschätzten verbrauchbaren elektrischen Leistung (PC), Bestimmen (130) einer Teilmenge (W') von Rechenaufgaben aus der Menge (W) von Rechenaufgaben, die in einem Zeitintervall ausgeführt werden sollen, und Schätzen (140) einer Planung der Teilmenge (W') von Rechenaufgaben auf der Vielzahl von Rechenressourcen (RES) und einer Steuerung der Vielzahl von Rechenressourcen (RES) und des ersten Wärmeregulierungssystems (TH1) in dem Zeitintervall;
   - in Abhängigkeit von der geschätzten Planung und Steuerung, Schätzen (150) einer von der Computerinfrastruktur (CU) verbrauchten elektrischen Leistung (PMIN) in dem Zeitintervall;
   - ein Energiemanagementsystem (EMS), das konfiguriert ist zum:

      - Berechnen (110) einer Schätzung der durch das Stromnetz (GRID) lieferbaren elektrischen Leistung (PDGRID) und einer Schätzung der durch die lokale Stromquelle (ENR) lieferbaren elektrischen Leistung (PDENR) in dem Zeitintervall;
      - Schätzen (120) der durch die Computerinfrastruktur (CU) verbrauchbaren elektrischen Leistung (PC) in dem Zeitintervall in Abhängigkeit von der Schätzung der durch das Stromnetz (GRID) lieferbaren elektrischen Leistung (PDGRID) in dem Zeitintervall und der Schätzung der durch die lokale Stromquelle (ENR) lieferbaren elektrischen Leistung (PDENR) in dem Zeitintervall; und
      - in Abhängigkeit von dem geschätzten benötigten elektrischen Leistungsbedarf (PMIN), Schätzen (160) einer Parametrierung (REP) des Stromnetzes (GRID) und der lokalen Stromquelle (ENR) in dem Zeitintervall,

   **dadurch gekennzeichnet, dass** das Berechnen der Schätzung der elektrischen Leistung (PDGRID) durch das Stromnetz (GRID) in Abhängigkeit von einem Index K erfolgt, der proportional zu einer Menge an CO2 ist, die durch das Stromnetz (GRID) zur Lieferung elektrischer Energie im Zeitintervall (t0) emittiert wird.

14. Computerprogrammprodukt, umfassend Anweisungen, die, wenn das Programm auf einem Computer ausgeführt wird, diesen veranlassen, die Schritte des Verfahrens (100) nach einem der Ansprüche 1 bis 12 zu implementieren.

15. Computerlesbares Aufzeichnungsmedium, umfassend Anweisungen, die, wenn sie durch einen Computer ausgeführt werden, diesen veranlassen, die Schritte des Verfahrens nach einem der Ansprüche 1 bis 12 zu implementieren.

**Claims**

1.  Method (100) for optimizing the electrical energy consumption of a computer infrastructure (CU) comprising a plurality of computing resources (RES) and a first temperature control system (TH1), the computer infrastructure (CU) being powered by an electrical grid (GRID) and at least one local electrical energy source (ENR), the computer infrastructure (CU) having to execute a set (W) of computing tasks using the plurality of computing resources (RES), the method (100) comprising the following steps:

    - calculating (110) an estimate of electrical power (PDGRID) that can be supplied by the electrical grid (GRID) and an estimate of electrical power (PDENR) that can be supplied by the local electrical energy source (ENR) over a time interval (t0);
    - estimating (210) an electrical power (PC) that can be consumed by the computer infrastructure (CU) over the time interval (t0), on the basis of the estimate of electrical power (PDGRID) that can be supplied by the electrical grid (GRID) over the time interval (t0) and of the estimate of the electrical power (PDENR) that can be supplied by the local electrical energy source (ENR) over the time interval (t0);
    - on the basis of the estimated consumable electrical power (PC), determining (230) a subset (W') of computing tasks from the set (W) of computing tasks to be executed over the time interval (t0), and estimating (250) a scheduling (ORD) of the subset (W') of computing tasks on the plurality of computing resources (RES) and a control (DRV) of the plurality of computing resources (RES) and the first temperature control system (TH1) over the time interval (t0);
    - on the basis of the estimated scheduling (ORD) and control (DRV), estimating (270) an electrical power (PMIN) required by the computer infrastructure (CU) over the time interval (t0);
    - on the basis of the estimated required electrical power (PMIN), determining (290) a parameterization (REP) of the electrical grid (GRID) and of the local electrical energy source (ENR) for the time interval,

    **characterized in that** the calculation of the estimate of electrical power (PDGRID) that can be supplied by the electrical grid (GRID) is a function of an index K proportional to a quantity of CO2 emitted by the electrical grid (GRID) to supply electrical energy over the time interval (t0).

2.  Method (100) according to the preceding claim, wherein the calculation (110) of the estimate of electrical power (PDGRID) that can be supplied by the electrical grid (GRID) takes into account a request to reduce the electrical consumption of the computer infrastructure (CU).

3.  Method (100) according to one of the preceding claims, wherein the calculation (110) of the estimate of electrical power (PDENR) that can be supplied by the local electrical energy source (ENR) takes into account at least one piece of environmental data (WND).

4.  Method (100) according to one of the preceding claims, wherein the local electrical energy source (ENR) is a renewable energy source.

5.  Method (100) according to one of the preceding claims, wherein the local electrical energy source (ENR) comprises an electrical energy storage unit (STR) which is configured to store a quantity of energy, and wherein the calculation (110) of the estimate of the electrical power (PDENR) that can be supplied by the local energy source (ENR) is a function of the quantity (Q) of energy stored in the electrical energy storage unit (STR).

6.  Method (100) according to the preceding claim, wherein excess production from the electrical grid (GRID) and/or from the local electrical energy source (ENR), not consumed by the computer infrastructure (CU) over the time interval (t0), is stored in the electrical energy storage unit (STR).

7.  Method (100) according to one of the two preceding claims, wherein the local electrical energy source (ENR) comprises a second temperature control system (TH2) coupled to the electrical energy storage unit (STR), determining (290) the parameterization (REP) also comprises parameterizing the second temperature control system (PTH2).

8.  Method (100) according to one of the preceding claims, wherein excess production from the local electrical energy source (ENR), not consumed by the computer infrastructure (CU) over the time interval (tG), is sent to the electrical grid (GRID).

9.  Method (100) according to one of the preceding claims, wherein each computing task of the set (W) of computing tasks has a criticality and wherein determining (130) the subset (W') of computing tasks is a function of the criticality of each computing task.

10. Method (100) according to one of the preceding claims, wherein each computing task of the set (W) of computing tasks has an estimate of a required number of resources, and wherein determining (130) the subset (W') of computing tasks to be executed over the time interval (t0) is also a function of the estimate of the number of resources required for each computing task.

11. Method (100) according to one of the preceding claims, further comprising:

   - parameterizing (320) the electrical grid (GRID), the local electrical energy source (ENR) and the temperature control system (TH) according to the estimated parameterization; and
   - scheduling the subset (W') of computing tasks on the plurality of computing resources (RES) and controlling the plurality of computing resources (RES) and the first temperature control system over the time interval (t0).

12. Method (100) according to one of the preceding claims,
   **characterized in that** the computer infrastructure (CU) is a supercomputer.

13. System (SYS) for optimizing the power consumption of a computer infrastructure (CU) comprising a plurality of computing resources (RES) and a first temperature control system (TH1), the computer infrastructure (CU) being powered by an electrical grid (GRID) and a local electrical energy source (ENR), and having to execute a set of computing tasks (W) using the plurality of computing resources (RES), the system (SYS) comprising:

   - an optimization module (OPT), configured to:

      - on the basis of an estimated consumable electrical power (PC), determine (130) a subset (W') of computing tasks from the set (W) of computing tasks to be executed over a time interval and estimate (140) a scheduling of the subset (W') of computing tasks on the plurality of computing resources (RES) and a control of the plurality of computing resources (RES) and of the first temperature control system (TH1) over the time interval;
      - on the basis of the estimated scheduling and control, estimate (150) an electrical power (PMIN) consumed by the computer infrastructure (CU) over the time interval;
      - an energy management device (EMS) configured to:

         - calculate (110) an estimate of electrical power (PDGRID) that can be supplied by the electrical grid (GRID) and an estimate of electrical power (PDENR) that can be supplied by the local electrical energy source (ENR) over the time interval;

   - estimate (120) the electrical power (PC) that can be consumed by the computer infrastructure (CU) over the time interval, on the basis of the estimate of electrical power (PDGRID) that can be supplied by the electrical grid (GRID) over the time interval and the estimate of electrical power (PDENR) that can be supplied by the local electrical energy source (ENR) over the time interval; and
   - on the basis of the estimated required electrical power (PMIN), estimate (160) a parameterization (REP) of the electrical grid (GRID) and the local electrical energy source (ENR) over the time interval,

   **characterized in that** the calculation of the estimate of electrical power (PDGRID) by the electrical grid (GRID) is a function of an index K proportional to a quantity of $CO_2$ emitted by the electrical grid (GRID) to supply electrical energy over the time interval (t0)

14. Computer program product comprising instructions that, when the program is executed on a computer, cause the computer to implement the steps of the method (100) according to one of claims 1 to 12.

15. Computer-readable recording medium comprising instructions that, when executed by a computer, cause the computer to implement the steps of the method according to one of claims 1 to 12.

FIG.1

FIG.2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2016105625 A1